# EUROPÄISCHE PATENTSCHRIFT

(11) **EP 1 685 002 B1**
(45) Veröffentlichungstag und Bekanntmachung des Hinweises auf die Patenterteilung: **11.04.2007**
(21) Anmeldenummer: 04787162.9
(22) Anmeldetag: 17.09.2004
(51) Int. Cl.: B60Q 1/48

(54) **VERFAHREN ZUR ERMITTLUNG EINER PARKLÜCKE**
METHOD FOR THE DETERMINATION OF A PARKING SPACE
PROCEDE POUR DETECTER UNE PLACE DE STATIONNEMENT

(30) Priorität: 06.11.2003 DE 10351894
(43) Veröffentlichungstag der Anmeldung: 02.08.2006
(73) Patentinhaber: ROBERT BOSCH GMBH, 70442 Stuttgart (DE)
(72) Erfinder: KNOLL, Peter, 76275 Ettlingen (DE); ENGELSBERG, Andreas, 31141 Hildesheim (DE); MANSTETTEN, Dietrich, 71139 Ehningen (DE); KUSSMANN, Holger, 31180 Giesen (DE); PLACKE, Lars, 30163 Hannover (DE); STOERZEL, Marc, 70825 Korntal-Muench. (DE); SCHWEIGER, Ulrich, 70180 Stuttgart (DE); LEE, Wei-Chia, 71229 Leonberg (DE)
(86) Internationale Anmeldenummer: PCT/EP2004/052223
(87) Internationale Veröffentlichungsnummer: WO 2005/044619

(56) Entgegenhaltungen:
- EP-A- 1 352 782
- DE-A- 19 847 013

## Beschreibung

Die Erfindung betrifft ein Verfahren zur Ermittlung einer Parklücke.

Zur Unterstützung eines Einparkvorgangs sind verschiedene Fahrerassistenzsysteme bekannt, z.B. Parkpiloten, die eine Trajektorie für einen Einparkvorgang berechnen und dem Fahrer jeweils Fahranweisungen zur Durchführung des Einparkvorganges geben. Derartige Fahrerassistenzsysteme verwenden Systeme zur Parklückenvermessung (PLV), die mittels z.B. Ultraschallsensoren oder Radarsensoren die Länge und die relative Position einer Parklücke zu dem eigenen Fahrzeug ermitteln und in Abhängigkeit von der Länge des eigenen Fahrzeuges und gegebenenfalls der erforderlichen Trajektorie für den Einparkvorgang beurteilen, in welche der drei Kategorien unmöglich; möglich und schwierig; möglich und leicht der Einparkvorgang einzuordnen ist.

Ein solches Verfahren ist z.b. aus der EP-A-1 352 782 bekannt.

Die Verwendung eines derartigen PLV-Systems kann insbesondere bei ungeübten und unsicheren Fahrern jedoch dazu führen, dass das eigene Fahrvermögen die von dem System abgeschätzten Möglichkeiten nicht erreicht So kann z.B. ein ungeübter Fahrer gegebenenfalls eine als möglich erkannte Parklücke eventuell auch nach mehrmaligen Versuchen nicht für einen Einparkvorgang nutzen; weiterhin kann eine als leicht eingestufte Parklücke vom Fahrer erst nach mehreren, aufwendigen Versuchen, gegebenenfalls mit hohem seitlichen Abstand zum Fahrbahnrand, genutzt werden. Auf der anderen Seite kann ein geübter Fahrer als schwierig erkannte Parklücken eventuell leicht meistern und sogar als nicht möglich eingestufte Parklücken nach einem aufwendigen Einparkvorgang mit mehreren Fahrtrichtungswechseln nutzen.

Diese Abweichungen der tatsächlichen Möglichkeiten aufgrund des eigenen Fahrvermögens und der von dem PLV-System ermittelten Einschätzung können dazu führen, dass der Fahrer das angebotene System nicht mehr nutzt, weil er sein Fahrvermögen abgewertet sieht oder die Einschätzungen als unbrauchbar bewertet. Derartige Systeme erfahren somit zum Teil eine geringe Akzeptanz durch die Benutzer.

Das erfindungsgemäße Verfahren weist demgegenüber insbesondere den Vorteil auf, dass eine Anpassung der vom PLV-System getroffenen Bewertungen an das jeweilige Fahrverhalten und Fahrvermögen des betreffenden Fahrers möglich ist. Hierbei passt sich das System auch dem sich ändernden Fahrvermögen und den Fahrgewohnheiten des Fahrers selbst tätig an. Hierdurch wird insbesondere eine hohe Akzeptanz des PLV-Systems durch den Fahrer erreicht, da die vom PLV-System getroffenen Bewertungen nach zumindest einigen Fehleinschätzungen den individuellen Fähigkeiten entsprechen. Der Fahrer und das erfindungsgemäße adaptive PLV-System können sich somit jeweils aufeinander einstellen.

Der Erfindung liegt der Gedanke zugrunde, die jeweiligen Parklücken durch geeignete Grenzwerte in mindestens zwei, vorzugsweise mindestens drei Kategorien zu unterteilen und die gewählten Grenzwerte in Abhängigkeit von dem bei den Einparkvorgängen ermittelten Fahrverhalten anzupassen. Hierbei wird mindestens ein Grenzwert, vorteilhafterweise mindestens zwei Grenzwerte - ein unterer Grenzwert, der die Bereiche nicht möglich und mittelschwierig trennt, und ein oberer Grenzwert, der die Bereiche mittelschwierig und leicht trennt - zur Abgrenzung der Kategorien gewählt.

Ein Einparkvorgang kann hierbei z.B. durch den vom Fahrer gewünschten Start des Verfahrens zur Parklückenvermessung oder einer Parkpilot- oder Einparkhilfe-Funktion erkannt werden. Ein Ende des Einparkvorganges kann vorteilhafterweise erkannt werden, wenn der Motor in einer Position des Fahrzeugs in der angestrebten Parklücke abgestellt wird.

Die Einschätzung des jeweiligen Fahrvorganges bzw. Fahrverhaltens beim Einparkvorgang kann sich auf die simple Bewertung "erfolgreich" oder "nicht erfolgreich" beschränken; vorteilhafterweise wird eine genauere Differenzierung durch aufgenommene Fahrdynamik daten, z.B. der Anzahl oder Frequenz der Lenkwinkeleinschläge bzw. Lenkwinkeleinschlagänderungen und der Anzahl der Fahrtrichtungswechsel bis zum Erreichen der Endposition vorgenommen, so dass bei erfolgreichen Einparkvorgängen zwischen leicht und mittelschwierig oder auch noch mehr Kategorien differenziert werden kann.

Nachfolgend können die vorher gewählten Grenzwerte mit der Bewertung des Fahrverhaltens verglichen werden. Falls eine vorher als erreichbar eingeschätzte Parklücke vom Fahrer nicht erreicht wurde, sollte zumindest der untere Grenzwert, der die zu kurzen, nicht erreichbaren Parklücken von den etwas größeren, mittelschwierig erreichbaren Parklücken trennt, angehoben werden. Vorteilhafterweise wird in diesem Fall entsprechend auch ein oberer Grenzwert, der die mittelschwierig erreichbaren Parklücken von den leicht erreichbaren Parklücken trennt, angehoben, damit der mittlere Bereich zwischen den Grenzwerten nicht zu klein wird. Falls eine Parklücke vom Fahrer erreicht wurde, können die Grenzwerte etwas abgesenkt werden; vorteilhafterweise wird jedoch bei Erreichen der Parklücke eine genauere Differenzierung des Fahrverhaltens vorgenommen und bei einem Einparkvorgang, der auf grund komplexen Fahrverhaltens mit z.B. vielen Lenkwinkeleinschlägen bzw. häufigen Lenkwinkeländerungen und häufigen Fahrtrichtungsänderungen als aufwendig eingestuft wird, die Grenzwerte nicht abgesenkt oder gegebenenfalls auch etwas angehoben.

Erfindungsgemäß kann das adaptive Verfahren zur Parklückenvermessung z.B. dem Fahrer bei deutlichen Verbesserungen seines Fahrvermögens dieses in einer kurzen Information über den Bordcomputer zur weiteren Motivation mitteilen.

Die Erfindung wird im Folgenden anhand der beiliegenden Zeichnungen an einigen Ausführungsformen erläutert. Es zeigen:
- Fig. 1: eine Einparksituation, die für das erfindungsgemäße Verfahren relevant ist;
- Fig. 2: ein Flussdiagramm des erfindungsgemäßen Verfahrens.

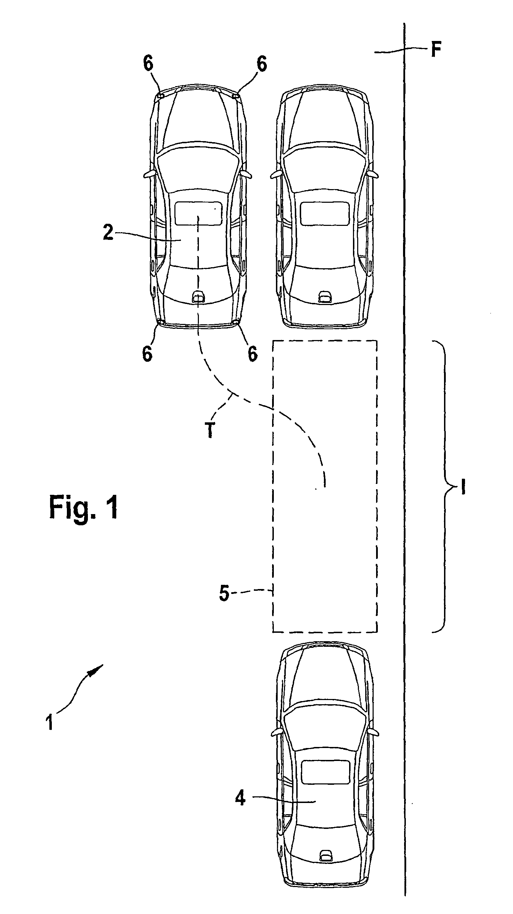

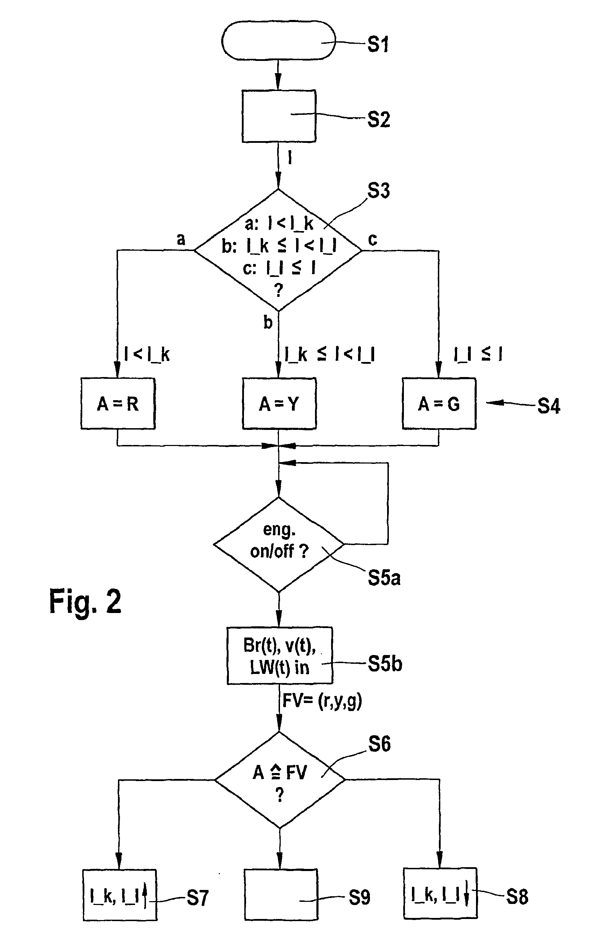

In der in Fig. 1 gezeigten Straßensituation 1 fahrt ein Fahrzeug 2 auf einer Fahrbahn F neben parkenden Fahrzeugen 3, 4. Gemäß Schritt S1 der Fig. 2 ist ein Verfahren zur Parklückenvermessung (PLV) gestartet. Der Fahrer des Fahrzeuges 2 entdeckt eine Parklücke 5 zwischen den Fahrzeugen 3, 4. Sensoren 6 auf z.B. Ultraschall-, Radar-, oder Stereokamerabasis, die z.B. in den Stoßfängern integriert sein können, ermitteln in Schritt S2 in an sich bekannter Weise eine Länge 1 der Parklücke 5. Das Verfahren zur Parklückenvermessung kann hierbei bei stehendem Fahrzeug 2 oder während der Fahrt neben der Parklücke 5 durchgeführt werden. Die Länge 1 und die seitliche Position der Parklücke 5 können gegebenenfalls nachfolgend für ein Parkassistenz-Verfahren oder Parkpilot-Verfahren zur Ermittlung einer Trajektorie T des Fahrzeuges 2 in die Parklücke 5 unter Ausgabe von z.B. Lenkempfehlungen und Fahrtrichtungsempfehlungen herangezogen werden.

In dem Entscheidungsschritt S3 wird die ermittelte Länge 1 mit einem vorgespeicherten unteren Grenzwert 1_k, der eine minimal erforderliche Parklückenlänge darstellt, und einem oberen Grenzwert 1_1, oberhalb von dem ein leichter Parkvorgang vorliegt, verglichen. In Abhängigkeit von dem Vergleich wird in Schritt S4 ein entsprechendes Anzeigesignal A, z.B. ein Farbsignal, ausgegeben. Das Anzeigesignal A kann z.B. durch Beleuchten einer von mehreren nebeneinander liegende Farbflächen einer Ampeldarstellung dargestellt werden.

In dem Fall a, gemäß dem die ermittelte Länge 1 der Parklücke 5 unter dem unteren Grenzwert 1_k liegt, d.h. 1 < 1_k ist, erkennt das System, dass ein Einparkvorgang nicht möglich ist. Dem Fahrer wird in Schritt S4 ein rotes Anzeigesignal A= R ausgegeben.

In dem Fall b, gemäß dem 1 größer/gleich 1_k und kleiner 1_l ist, d.h. 1_k ≤ 1 < 1_l, erkennt das System, dass ein mittelschwerer Einparkvorgang möglich ist. Dem Fahrer wird entsprechend über die Anzeigeeinrichtung z.B. ein gelbes Anzeigesignal A= Y, ausgegeben.

In dem Fall c, gemäß dem 1 ≥ 1_l ist, erkennt das System, dass ein leichter Einparkvorgang möglich ist und gibt dem Fahrer in Schritt S4 ein entsprechendes grünes Anzeigesignal A= G aus.

In Schritt S4 wird vorteilhafterweise auch eine Aufzeichnung von Fahrdynamikdaten, z.B. der Geschwindigkeit v (t) und des Lenkwinkeleinschlages LW (t) und des Bremssignals Br(t) sowie gegebenenfalls weiterer Messgrößen über z.B. den fahrzeuginternen CAN-Bus begonnen. Die Aufzeichnung kann z.B. auch erst gestartet werden, wenn der Fahrer eine Parkpilot (PP) -Funktion oder Einparkhilfe (EPH) -Funktion startet

In Schritt 5a wird überprüft, ob der Einparkvorgang beendet ist. Ein erfolgreiches Ende des Einparkvorganges wird z.B. bei Abstellen des Motors als entsprechendes Signal "eng. on/off " über den CAN -Bus erkannt. Ein fehlgeschlagener Einparkvorgang kann z.B. erkannt werden, falls der Motor nach einer Zeit nach Beginn des Einparkvorganges nicht abgestellt wird.

In Schritt S5b werden die zwischengespeicherten Fahrdynamikdaten des Fahrzeuges während des Einparkvorganges des Fahrzeuges 2 eingelesen und beurteilt. Bei der Beurteilung des Fahrverhaltens können grundsätzlich lediglich zwei Werte, nämlich Einparkvorgang erfolgreich oder Einparkvorgang erfolglos, gebildet werden. Vorteilhafterweise erfolgt hier jedoch eine genauere Beurteilung aus z.B. der Lenkfrequenz, der Zeitdauer des Einparkvorgangs und/oder der Anzahl der Fahrtrichtungswechsel, d.h. der Häufigkeit des Hin- und Zurückfahrens. Hierbei wird ein das Fahrverhalten kennzeichnendes Bewertungssignal FV ausgegeben oder abgespeichert, das z.B. die Werte y, d.h. mittelschwerer Einparkvorgang, g, d.h. leichter Einparkvorgang, oder gegebenenfalls r, d.h. fehlgeschlagener Einparkvorgang, annehmen kann.

In Schritt S6 werden die Signale A= (R,Y,G) und FV= (r,y,g) verglichen. Nachfolgend kann keine Änderung erfolgen oder in Schritt S7 eine Erhöhung der Grenzwerte 1_k und/oder 1_l oder in Schritt S8 ein Absenkung der Grenzwerte 1_k und/oder 1_l vorgenommen werden.

Hierbei können z.B. bei A=G oder A=Y und FV = r der untere Grenzwert 1_k und der obere Grenzwert 1_l erhöht werden. Bei A = Y oder A = R und FV = g können nachfolgend einer und/oder beide Grenzwerte 1_k, 1_l verringert werden. Falls der Einparkvorgang zwar gelungen ist, jedoch ein mittelschwerer Einparkvorgang ermittelt wurde, d.h. FV = y, kann z.B. bei A=G oder A=Y in Schritt S8 einer oder beide Grenzwerte 1_l und/oder 1_k erhöht werden; bei A=R in Schritt S7 einer oder beide Grenzwerte 1_l und/oder 1_k verringert werden.

Erfindungsgemäß kann die Änderung des Grenzwertes oder der beiden Grenzwerte auch differenzierter vorgenommen werden, z.B. durch Bildung eines kontinuierlichen Wertes für FV und einer Änderung proportional zu der Abweichung des Anzeigesignals A von FV.
Die in den Schritten S 7, S 8 korrigierten Grenzwerte 1_l und 1_k ersetzen nachfolgend die vorher gespeicherten Werte 1_l, 1_k. Gegebenenfalls kann hierbei statt der Ersetzung der alten Werte durch die jeweils ermittelten aktuellen Werte auch eine Langzeitermittlung über mehrere Einparkvorgänge durchgeführt werden.

Die Grenzwerte 1_l und 1_k können in dem Fahrzeug 2 grundsätzlich auch fahrerspezifisch gespeichert werden, wenn das Fahrzeug 2 z.B. von mehreren Personen - die im Allgemeinen ein unterschiedliches Fahrverhalten und Fahrkönnen aufweisen - gefahren werden kann. In diesem Fall kann entsprechend bei Fahrtantritt abgefragt werden, wer das Fahrzeug fährt. Es wird somit ein adaptives Verfahren mit ständiger Anpassung der Grenzwerte 1_l und 1_k an das Fahrverhalten des Fahrers geschaffen. In einer Ausführungsform erfolgt eine Personalisierung der persönlichen Einparkbewertung z.B. über eine entsprechende Tastenauswahl entsprechend einer Auswahl einer personalisierten, gespeicherten Sitzposition.

Ein Einparkverhalten eines Fahrers kann beispielsweise wie folgt bewertet werden: Wird während des Einparkens ein geringer Lenkrichtungswechsel, ein geringer Fahrtrichtungswechsel und eine geringe Einparkdauer ermittelt, so war die Parklücke offenbar für den Fahrer groß genug. Ein solcher Fall kann z.B. dann vorliegen, wenn maximal drei Lenkrichtungswechsel, maximal ein Fahrtrichtungswechsel und eine Einparkdauer von maximal bis zu 20 Sekunden benötigt wurden. In diesem Fall können die Grenzwerte unverändert bleiben. Sie können aber gegebenenfalls auch nach einer gewissen Zeit geringfügig herabgesetzt werden, sollten für vergleichbare Parklücken stets sehr gute Ergebnisse erzielt werden. Damit kann der Fahrer, der möglicherweise nun geübter fährt, zukünftig auch positive Bewertungen kleinerer Parklücken erhalten. Werden jedoch regelmäßig mehr Lenkrichtungswechsel, Fahrtrichtungswechsel und höhere Einparkdauern für positiv bewertete Parklücken ermittelt, so wird der Grenzwert heraufgesetzt. Die Korrektur sollte dabei davon abhängen, wie oft eine Korrektur durch den Fahrer erfolgt. Werden für eine bestimmte Parklückengröße vier bis fünf Lenkrichtungswechsel, drei bis vier Fahrtrichtungswechsel und eine Einparkdauer von mehr als 25 Sekunden benötigt, so handelt es sich hierbei möglicherweise um eine Parklücke, in die der Fahrer nur schwer hereinfahren kann. Eine Parklücke, bei der mehr als zehn Lenkrichtungswechsel, mehr als sechs Fahrtrichtungswechsel und eine Einparkdauer von ca. einer Minute benötigt werden, sollten so gewertet werden, dass sie für den Fahrer als unmöglich angezeigt werden.

Bei der Bewertung sollte berücksichtigt werden, dass einzelne schlechte Ereignisse, wie sie z.B. bei einem Parken an einem steilen Hang oder bei einem schlechten Bodenbelag, wie z.B. Schnee oder Kies, sowie andere Beeinträchtigungen der Fahrbahn auftreten könnten, nicht die gesamte Bewertung stören können. Einzelne Ausreißer sollten daher nicht berücksichtigt werden. Dies gilt insbesondere für Systeme, bei denen eine Personalisierung nicht vorgesehen ist, oder für den Fall, dass eine Personalisierung möglicherweise fehlerhaft erfolgte. Daher erfolgt eine personalisierte Bewertung einer Parklücke bevorzugt auch erst dann, wenn über eine ausreichende Anzahl an Einparkvorgängen gemittelt werden kann, so z.B. über mindestens fünf Einparkvorgänge.

## Patentansprüche

1. Verfahren zur Ermittlung einer Parklücke, mit mindestens folgenden Schritten:
Vermessen einer Parklücke (5) und Ausgabe einer gemessenen Länge (1) der Parklücke (5),
Vergleichen der ermittelten Länge (1) mit mindestens einem Grenzwert und Ermittlung eines Anzeigesignals
Ausgabe des Anzeigesignals an den Fahrer,
Aufnahme von Fahrdynamiksignalen während eines Einparkvorganges,
Bewertung des Einparkvorganges auf Grundlage der aufgenommenen Fahrdynamiksignale und Ausgabe eines Bewertungssignals, und
Änderung des mindestens einen Grenzwertes in Abhängigkeit von dem Bewertungssignal und dem Anzeigesignal (A).

2. Verfahren nach Anspruch 1, **dadurch gekennzeichnet, dass** das Bewertungssignal (FV) und das Anzeigesignal (A) miteinander verglichen werden und bei einer Übereinstimmung des Bewertungssignals und des Anzeigesignals keine Änderung erfolgt und bei einer Abweichung ein oder mehrere Grenzwerte verändert werden.

3. Verfahren nach Anspruch 1 oder 2, **dadurch gekennzeichnet, dass** mindestens ein unterer Grenzwert der eine minimal mögliche Länge (1) der Parklücke bezeichnet, und ein oberer Grenzwert, der einen leichten Einparkbereich von einem mittelschweren Einparkbereich trennt, bei dem Vergleich verwendet und in Abhängigkeit von dem Bewertungssignal (FV) und dem Anzeigesignal (A) geändert werden.

4. Verfahren nach Anspruch 3, **dadurch gekennzeichnet, dass** in dem Fall, dass aus der gemessenen Länge (1) der Parklüge ein möglicher Einparkvorgang ermittelt wird und als Beweriungssignal ein erfolgloser Einparkvorgang ermittelt wird der untere Grenzwert erhöht wird.

5. Verfahren nach Anspruch 3, **dadurch gekennzeichnet, dass** auch der obere Grenzwert erhöht wird.

6. Verfahren nach einem der Ansprüche 3 bis 5, **dadurch gekennzeichnet, dass** in dem Fall, dass ein erfolgreicher, leichter Einparkvorgang ermittelt wird und die ermittelte Länge (1) der Parklücke (5) in dem mittleren Bereich zwischen dem unteren Grenzwert und dem oberen Grenzwert liegt, der untere und obere Grenzwert verringert werden.

7. Verfahren nach einem der vorherigen Ansprüche, **dadurch gekennzeichnet, dass** ein quantitativer Vergleich des Anzeigesignals und des Bewertungssignals durchgeführt wird und eine Größe der Änderung eines oder mehrerer Grenzwerte in Abhängigkeit von der Höhe der Abweichung erfolgt.

8. Verfahren nach einem der vorherigen Ansprüche, **dadurch gekennzeichnet, dass** als Anzeigesignal ein optisches Farbsignal ausgegeben wird, wobei
in einem ersten Fall dass die gemessene Länge (1) der Parklücke (5) in dem unteren Bereich unterhalb des unteren Grenzwertes liegt, ein rotes Farbsignal
in einem zweiten Fall dass die gemessene Länge (1) in einem mittleren Bereich zwischen dem unteren Grenzwert und dem oberen Grenzwert liegt, ein gelbes Farbsignal und
in dem dritten Fall dass die gemessene Länge (1) in einem oberen Bereich oberhalb des oberen Grenzwertes liegt, ein grünes Farbsignal ausgegeben wird.

9. Verfahren nach einem der vorherigen Ansprüche, **dadurch gekennzeichnet, dass** eine Änderung der Grenzwerte durch eine Langzeitermittlung über mehrere Einparkvorgänge vorgenommen wird.

10. Verfahren nach einem der vorherigen Ansprüche, **dadurch gekennzeichnet, dass** als Fahrdynamiksignale mindestens eines der folgenden zeitabhängigen Signale genommen wird:
Fahrzeuggeschwindigkeit (V (t)), Lenkwinkel (LW (t)), Bremssignal (Br).

11. Verfahren nach einem der vorherigen Ansprüche, **dadurch gekennzeichnet, dass** ein Ende des Einparkvorganges erkannt wird, wenn das Fahrzeug sich innerhalb der ermittelten Parklücke (5) befindet und der Motor abgestellt wird.

12. Verfahren nach Anspruch 11, **dadurch gekennzeichnet, dass** ein erfolgloser Einparkvorgang ermittelt wird, wenn der Motor innerhalb eines vorgegebenen Zeitraumes nicht in der Parklücke abgestellt wird.

13. Verfahren nach einem der vorherigen Ansprüche, **dadurch gekennzeichnet, dass** ein jeweiliger Fahrer identifiziert wird und dass eine Bewertung des Einparkverhaltens dem Fahrer zugeordnet wird.

## Claims

1. Method for determining a parking space, having at least the following steps:
a parking space (5) is measured and a measured length (1) of the parking space (5) is output,
the determined length (1) is compared with at least one limiting value and a display signal is determined,
the display signal is output to the driver,
the vehicle movement dynamic signals are recorded during a parking process,
the parking process is evaluated on the basis of the recorded vehicle movement dynamic signals and
an evaluation signal is output and at least one limiting value is changed as a function of the evaluation signal and the display signal (A).

2. Method according to Claim 1, **characterized in that** the evaluation signal (FV) and the display signal (A) are compared with one another and when the evaluation signal and the display signal correspond a change does not take place and when they differ one or more limiting values are changed.

3. Method according to Claim 1 or 2, **characterized in that** at least one lower limiting value which designates a minimum possible length (1) of a parking space, and an upper limiting value which separates an easy parking area from a parking area of medium difficulty, are used in the comparison and are changed as a function of the evaluation signal (FV) and the display signal (A).

4. Method according to Claim 3, **characterized in that** if a possible parking process is determined from the measured length (1) of the parking space and an unsuccessful parking process is determined as an evaluation signal the lower limiting value is increased.

5. Method according to Claim 3, **characterized in that** the upper limiting value is also increased.

6. Method according to one of Claims 3 to 5, **characterized in that** if a successful, easy parking process is determined and the determined length (1) of the parking space (5) is in the central region between the lower limiting value and the upper limiting value the lower and upper limiting values are reduced.

7. Method according to one of the preceding claims, **characterized in that** a quantitative comparison of the display signal and of the evaluation signal is carried out and a magnitude of the change of one or more limiting values takes place as a function of the level of the difference.

8. Method according to one of the preceding claims, **characterized in that** a visual colour signal is output as the display signal, a red colour signal being output in a first case in which the measured length (1) of the parking space (5) is in the lower region below the lower limiting value,
a yellow colour signal being output in a second case in which the measured length (1) is in a central region between the lower limiting value and the upper limiting value, and
a green colour signal being output in the third case in which the measured length (1) is in an upper region above the upper limiting value.

9. Method according to one of the preceding claims, **characterized in that** the limiting values are changed by long term determination over a plurality of parking processes.

10. Method according to one of the preceding claims, **characterized in that** at least one of the following time-dependent signals is adopted as vehicle movement dynamic signals:
velocity (V(t)), steering angle (LW(t)), brake signal (Br).

11. Method according to one of the preceding claims, **characterized in that** an end of the parking process is detected if the vehicle is located within the determined parking space (5) and the engine is switched off.

12. Method according to Claim 11, **characterized in that** an unsuccessful parking process is determined if the engine is not shut down in the parking space within a predefined time period.

13. Method according to one of the preceding claims, **characterized in that** a respective driver is identified, and **in that** an evaluation of the parking behaviour is assigned to the driver.

## Revendications

1. Procédé de détermination d'une place de stationnement, comportant au moins les étapes suivantes consistant à :
- mesurer une place de stationnement (5) et délivrer une longueur mesurée (I) de la place de stationnement (5),
- comparer la longueur définie (1) à au moins une valeur limite et définir un signal d'annonce,
- émettre le signal d'annonce au conducteur,
- recevoir les signaux de dynamique de conduite pendant une manoeuvre de stationnement,
- évaluer la manoeuvre de stationnement sur la base des signaux de dynamique de conduite enregistrés et émettre un signal d'évaluation, et
- modifier au moins une valeur limite en fonction du signal d'évaluation et du signal d'annonce (A).

2. Procédé selon la revendication 1,
**caractérisé en ce qu'**
on compare le signal d'évaluation (FV) et le signal d'annonce (A) l'un à l'autre et en cas de concordance du signal d'évaluation et du signal d'annonce on n'effectue aucune modification, et en cas de divergence on modifie une ou plusieurs valeurs limites.

3. Procédé selon la revendication 1 ou 2,
**caractérisé en ce qu'**
on utilise lors de la comparaison au moins une valeur limite inférieure désignant une longueur minimum possible (1) de la place de stationnement, et une valeur limite supérieure séparant une zone de stationnement facile d'une zone de stationnement moyennement difficile, et on les modifie en fonction du signal d'évaluation (FV) et du signal d'annonce (A).

4. Procédé selon la revendication 3,
**caractérisé en ce qu'**
on augmente la valeur limite inférieure, au cas où on détecte une manoeuvre de stationnement possible d'après la longueur mesurée (I) de la place de stationnement et si on définit une manoeuvre de stationnement infructueuse en tant que signal d'évaluation.

5. Procédé selon la revendication 3,
**caractérisé en ce qu'**
on augmente également la valeur limite supérieure.

6. Procédé selon l'une quelconque des revendications 3 à 5,
**caractérisé en ce qu'**
on réduit la valeur limite inférieure et supérieure, au cas où on détecte une manoeuvre de stationnement facile et fructueuse et si la longueur détectée (1) de la place de stationnement (5) se situe dans la zone centrale entre la valeur limite inférieure et la valeur limite supérieure.

7. Procédé selon l'une quelconque des revendications précédentes,
**caractérisé en ce qu'**
on effectue une comparaison quantitative du signal d'annonce et du signal d'évaluation, et on déduit une grandeur de la modification d'une ou plusieurs valeurs limites en fonction de l'importance de l'écart.

8. Procédé selon l'une quelconque des revendications précédentes,
**caractérisé en ce que**
comme signal d'annonce, on émet un signal optique de couleur en émettant un signal de couleur rouge dans un premier cas où la longueur mesurée (1) de la place de stationnement (5) se situe dans la zone inférieure en dessous de la valeur limite inférieure, un signal de couleur jaune dans un deuxième cas où la longueur mesurée (1) se situe dans une zone centrale entre la valeur limite inférieure et la valeur limite supérieure, et un signal de couleur verte est émis dans un troisième cas où la longueur mesurée (1) se situe dans une zone supérieure au-dessus de la valeur limite supérieure.

9. Procédé selon l'une quelconque des revendications précédentes,
**caractérisé en ce qu'**
on entreprend une modification des valeurs limites par une détection à long terme sur plusieurs manoeuvres de stationnement.

10. Procédé selon l'une quelconque des revendications précédentes,
**caractérisé en ce qu'**
on prend comme signaux de dynamique de conduite au moins l'un des signaux dépendant du temps suivants :
vitesse de véhicule (V (t)), angle de direction ( LW (t)), signal de freinage (BR).

11. Procédé selon l'une quelconque des revendications précédentes,
**caractérisé en ce qu'**
on distingue la fin d'une manoeuvre de stationnement quand le véhicule se trouve dans la place de stationnement détectée (5) et quand le moteur est arrêté.

12. Procédé selon la revendication 11,
**caractérisé en ce qu'**
on détecte qu'une manoeuvre de stationnement est infructueuse quand le moteur n'est pas arrêté dans la place de stationnement dans un intervalle de temps prédéterminé.

13. Procédé selon l'une quelconque des revendications précédentes,
**caractérisé en ce qu'**
on identifie un conducteur respectif et on associe au conducteur une évaluation du comportement de parquage.
